# EUROPEAN PATENT SPECIFICATION

(11) **EP 1 694 992 B1**
(45) Date of publication and mention of the grant of the patent: **07.10.2009**
(21) Application number: 04783560.8
(22) Date of filing: 30.08.2004
(51) Int. Cl.: F16K 15/20

(54) **CONNECTOR ASSEMBLY FOR FLEXIBLE INFLATABLE ARTICLES**
VERBINDERANORDNUNG FÜR FLEXIBLE, AUFBLASBARE ARTIKEL
ASSEMBLAGE DE RACCORDEMENT POUR DES ARTICLES GONFLABLES SOUPLES

(30) Priority: 18.12.2003 US 742615
(43) Date of publication of application: 30.08.2006
(73) Proprietor: Gore Enterprise Holdings, Inc., Newark, DE 19714-9206 (US)
(72) Inventor: TRAPP, Benjamin, M., Flagstaff, AZ 86001 (US); CULLER, Gregory, D., Nottingham, PA 19362 (US); LACK, Craig, D., Wilmington, DE 19808 (US)
(74) Representative: Shanks, Andrew
(86) International application number: PCT/US2004/029350
(87) International publication number: WO 2005/068882

(56) References cited:
- EP-A- 0 393 594
- EP-A- 0 485 362
- GB-A- 426 786
- US-A- 2 064 695

## Description

### FIELD OF THE INVENTION

The present invention relates to a connector assembly, more particularly to a low profile connector assembly for connecting a source of inflation fluid, e.g., air or liquid, to a flexible inflatable article such as an inflatable garment, an air mattress, a flexible canteen, or other similar-in-principle construction.

### BACKGROUND OF THE INVENTION

Inflatable articles which are relatively flexible in use exist for a wide range of applications from air inflatable garments, mattresses, sleeping bags, and the like, to liquid inflatable canteens, bladders, heating/cooling pads, and other similar-in-principle constructions. As used herein, the term inflatable is intended to refer to the ability to create some pressure gradient between the interior and exterior of an article. In certain instances the inflation pressure may be significant (e.g., pressure gradients of 0.07 bar (1.0 psi) or above); however, in other instances only a slight pressure gradient may exist, and the article may be designed to permit air or liquid leakage above some pressure gradient. The term flexible is intended to refer to materials having a flexural rigidity, as described in more detail herein, of 50,000 N*m or less, preferably 1000 N*m or less, and most preferably 200 N*m or less.

Inflatable articles, for example, air mattresses, are generally provided with an inflation valve. Such valves can be simple plastic tubes affixed to a wall of the inflatable article and having a stop cock affixed thereto. Opening the stop cock allows for deflation of the inflatable article or for inflation through the tube by manual means such as by a person blowing air through the tube and into the inflatable article. Alternatively, various types of pumps are available and have been employed to force air into such inflatable articles. Especially suited for inflatable garments and the like is a bellows pump disclosed in U.S. Patent Application Serial No. 10/230,889, which is commonly assigned. The Patent Application Serial No. 10/230, 889*,* which is commonly assigned. The term air is used for convenience herein; however, it should be appreciated that other suitable gases may be used depending on the specific application of the article.

In the case of liquid inflatable articles, collapsible or other suitably flexible canteens and bladders exist typically incorporating screw-on or snap-on fill ports affixed to the collapsible container and extending substantially perpendicular therefrom.

Pressure relief valves incorporated into inflatable articles, such as garments and the like have been taught. U.S. Patent Application Publication No. 2003-0106141 is directed to an inflatable, breathable module having one or more inflatable cavities in the module and which further incorporates a pressure relief means for reducing pressure in the inflated portion(s) should the module be subjected to sudden or excessive stress.

EP 0485362 describes a patient support structure having a number of inflatable sacks. The document also describes an inflation assembly for connecting the inflatable sacks to an inflation source. The assembly comprises a connection member having a first, generally tubular insertable section, insertable through an adaptor of the sack and a second external pipe extending oppositely from the insertable section and outwardly from the sack upon insertion. The external section and the insertable section are connected, the two sections providing a continuous air passageway in to the sack. The insertable section has an external circumferential groove there around which, upon insertion into and through said sack adaptor is secured by a sealing ring. The ring is stretched into the groove, the ring providing a seal at the adaptor, thereby sealing off leakage of fluid to or from said sack and confining fluid passage to and through the passageway, thereby providing, when assembled, a pathway for fluid communication from the external source into the inflatable sack.

A need has existed for an improved assembly for a flexible inflatable article which provides ease of connection and disassembly from an external inflation source, is relatively simple to incorporate in a continuous manufacturing operation, presents a low profile during manufacturing and in use when affixed to a flexible inflatable article, and which further incorporates a pressure relief means. The present invention provides such an assembly. Other advantages of the connector assembly of the invention will become apparent from the following specification.

### SUMMARY OF THE INVENTION

A low-profile connector assembly for connecting a flexible inflatable article to a source of inflation fluid, e.g., air or liquid, is provided. The assembly includes a semi-rigid, hollow connector housing having a first, generally tubular, insertable section, insertable through an opening in a flexible wall of the inflatable article. A second external section extends oppositely from the insertable section and outwardly from the flexible wall upon insertion. The external section and the insertable section are connected and oriented generally at an angle with respect to each other (i.e., less than 180 degrees), more preferably at a substantially right angle. The two sections provide a continuous air or liquid passageway therethrough into the inflatable article upon insertion therein, the passageway extending from an external opening in the external section, which is removably connectable thereat to a source of inflation air or liquid. The passageway extends through the connector assembly and into the inflatable article. The insertable section has an external circumferential groove therearound which, upon insertion into and through the flexible wall opening, is secured thereat by an elastic washer positioned immediately adjacent to and concentric with the wall opening. By positioned it is meant that the washer may be held against the wall by compression between the wall and the insertable section, or affixed by means of some bond (e.g., adhesive, heat-bonded, etc.) between the wall and the washer, or even integrated with the flexible wall (e.g., molded In, etc.).

The washer is press-fit into the groove, thereby providing a seal at the wall opening and sealing off leakage of air to or from the inflatable article and the atmosphere and confining air or liquid passage to and through the passageway. When assembled, a low-profile pathway for fluid communication from an external source into the flexible inflatable article through an opening in a flexible wall thereof is provided.

The connector assembly preferably further includes a valve which controls flow therethrough. The valve may be a one-way check valve, a two-way check valve, a pinch valve , or similar valve construction.

In one preferred embodiment for air inflation of an inflatable article, the connector assembly can be designed to provide a pressure gradient of at least 0.04 bar (0.5 psi), preferably effective to a pressure gradient of at least 0.07 bar (1.0 psi).

The assembly housing and insertable section preferably are integrally formed into a unitary construction, but the insertable section may be formed as a hollow tubular component having a rim slidably mounted externally thereover, with the rim having an external circumferential groove therearound.

In a further preferred embodiment, the elastic washer is affixed to the flexible wall, preferably adhesively, but it may be affixed under heat and pressure or other suitable means. Further, the washer may be affixed by integrally molding it to the flexible wall material. The washer is preferably an elastomer, either a natural elastomer or a synthetic elastomer such as a polyurethane elastomer or a silicone elastomer.

The connector assembly may be used to connect inflatable articles such as garments, including a vest, a jacket, a pant, a coat and similar constructions, a mattress, a sleeping bag, or other flexible articles to a source of inflation air. Additionally, such as connector assembly may be used to connect inflatable articles such as collapsible canteens, bladders, heating/cooling pads and other flexible devices to a source of inflation liquid. The connector assembly provides advantages in, for example, ease of assembly, ease in use and relatively low profile of the connector in the finished article relative to prior art devices.

### BRIEF DESCRIPTION OF THE DRAWINGS

In the accompanying drawings:
Fig. 1 depicts the low profile connector assembly of the present invention connecting a small manual air pump to the inlet opening of an inflatable garment, specifically an inflatable vest.
Fig. 2 shows a top perspective view of one embodiment of the connector housing.
Fig. 3 shows a bottom perspective view of the connector housing of Fig. 2.
Fig 4. is a cross-sectional view of an embodiment of the connector housing according to the invention.
Fig. 5 is a cross-sectional view of a connector assembly according to the invention, connected to the flexible wall of an inflatable construction such as an inflatable garment, air mattress or collapsible canteen.
Fig. 6 is an exploded view of the connector assembly, including an auxiliary check valve and pump, shown schematically, according to the invention.
Fig. 7 depicts the low profile connector assembly of the invention connecting a small air pump to the inlet port of an inflatable air mattress.
Fig. 8 is an exploded view of an alternative embodiment of the connector of the invention.
Fig. 9 is a perspective view of a rim having a groove, which rim is employed in securing the alternate connector assembly to the connector housing.
Fig. 10 is a cross-sectional view of the alternate connector assembly including the connector housing, separate grooved rim and securing washer all connected together.
Figure 11 depicts the low profile connector assembly of the invention connecting a liquid fill valve to the inlet port of a collapsible canteen.

### DETAILED DESCRIPTION OF THE INVENTION

A low profile connector assembly is provided for connecting a flexible inflatable article such as an inflatable garment, air mattress or collapsible canteen to a source of inflation air or liquid. The connector includes a semi-rigid, hollow connector housing having a first, generally tubular, insertable section, insertable through an opening in a flexible wall of the inflatable article. A second external section extends oppositely from the insertable section and outwardly from the flexible wall upon insertion, the external section and the insertable section are connected and oriented generally at an angle with respect to each other to create a low profile relative to the article, most preferably the sections are oriented at right angles with respect to each other. The two sections provide a continuous air or liquid passageway therethrough into the inflatable article upon insertion therein. The passageway extends from an external opening in the external section, and is removably connectable thereat to a source of inflation air or liquid. The insertable section has an external circumferential groove therearound which , upon insertion into and through the opening in the flexible wall, is secured thereat by an elastic washer positioned immediately adjacent to and concentric with the wall opening. The washer is press-fit into the groove, providing a seal at the wall opening.

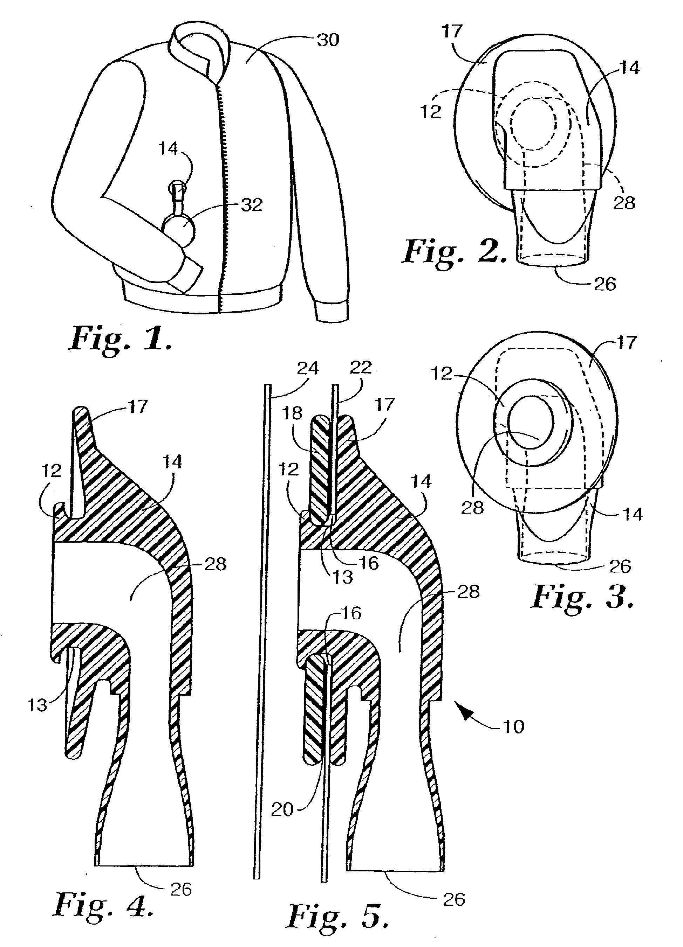

A detailed description of the invention and preferred embodiments is best provided with reference to the accompanying drawings wherein Fig. 1 is a perspective view of an embodiment of the connector assembly of the invention connecting a small manual pump 32 to an inflatable vest. The connector housing 14, exposed externally, is visible in this figure.

The connector housing 14 is shown in detail in Fig. 2. The housing of this embodiment includes flanged base 17 and grooved insertable section 12 all molded as one piece with the outwardly extending external section 14, which in this external section is shown having a substantially right angle bend therein. It should be appreciated, however, that this external section may have any appropriate angle (i.e., 180° or less) depending on the desired form required by the article. For example, where significant projects from inflatable surfaces are objectionable in use, such right angle sections are preferred. Opening 26 is provided for removable connectivity to an external source of air or liquid, for example the manual pump depicted in Fig. 1. The passageway through the connector is depicted by dotted lines and is described in detail below.

Fig. 3 shows the connector housing 14 viewed from its opposite side to that shown in Fig. 2. Extending from the flanged base 17 is the insertable section 12 opening into the passageway 28 through the housing 14, depicted by dotted lines, to the external inlet 26, adapted to be connected to an inflation air or liquid source.

Fig. 4 is a cross-sectional view of the connector housing 14 useful in the low profile assembly of this invention. Therein, the housing 14 comprises a unitary construct having a flanged base 17 which houses a passageway28 extending from an inlet opening 26, through the housing 14, and extending through the internal (inserted) section 12 having circumferential groove 13 therearound. The housing 14 in this embodiment is configured such that passageway 28 passes through a substantially right angle bend proceeding from the insertable section 12 through the housing 14 and to the inlet opening 26.

One embodiment of the complete connector assembly 10 according to this invention is depicted in cross-section in Fig. 5. Therein the housing 14 having passageway 28, extending from inlet 26 through the housing 14 and through insertable section 12, is inserted into and through opening 16 in the flexible wall 22 of an inflatable construction as shown. The opposite wall 24 of the inflatable article is shown for completeness. To secure the connector housing 14 in its inserted configuration, an elastic washer 18 is press-fit over the internal end of insertable section 12 and washer 18 seats within the circumferential groove 13 around the inserted section 12, thereby sealing against passage of air (or liquid) through the opening 16 and confining substantially all air (or liquid) to and through passageway 28. To further ensure against air or liquid leakage, the washer 18 may be, and preferably is, secured to the flexible wall 22 and around opening 16 by, for example, an adhesive layer 20, or by other means, such as by heat and pressure or other suitable securing means.

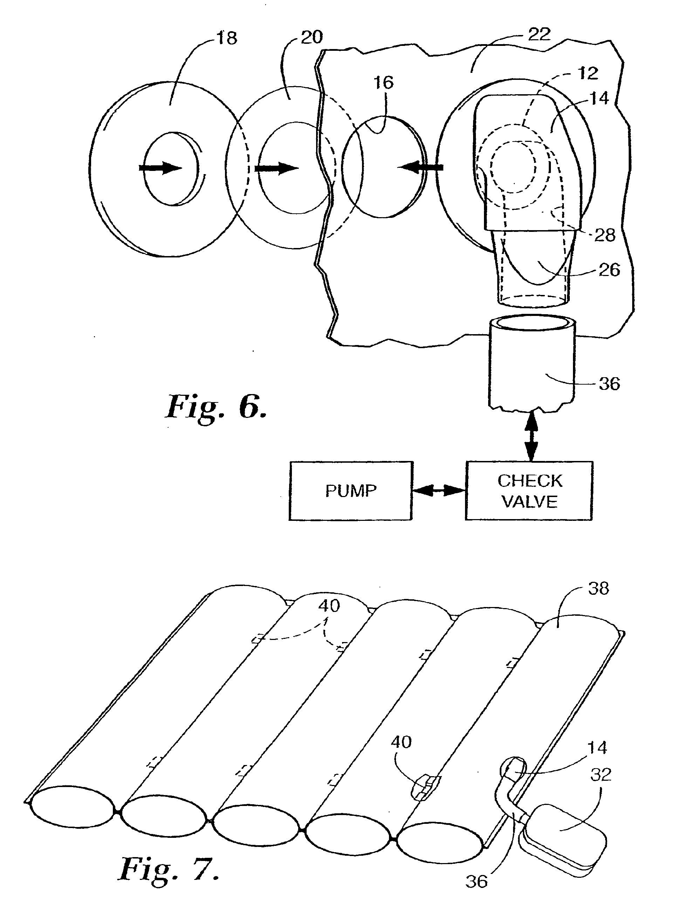

Fig. 6 shows an exploded view of the connector assembly 10 depicted in Fig. 5. In Fig. 6, a source of inflation air, in this embodiment a reversible pump, is shown schematically connected through a check valve by connection 36 to inlet 26 of the housing 14. The passageway 28 through the housing 14 (depicted by dotted lines) passes through, in this preferred embodiment, a substantially right angle and to the inlet section 12. The inlet section 12 is to be inserted through opening 16 in flexible wall 22, indicated by the arrow, and the washer 18 is to be press-fit into the circumferential groove 13 of the inserted section 12, the washer 18 being optionally and preferably secured around the opening 16 of the flexible wall 22 by means of the adhesive layer 20, also all as indicated by the arrows shown.

When the washer 18 is press-fit onto the insert section 12, the washer 18 must deform to allow the insert section to be inserted. After deforming, the washer must recover to seat into the groove 13. Washer 18 must have the ability to recover after such deformation, i.e., it must be elastic, in order to effect a seal when seated in groove 13.

A washer which is 100% elastic will seek to recover to its original, predeformed inside diameter (ID). If the outside diameter of the insert is larger than the ID of the washer, a compression seal will result.

If the washer 18 is constructed of an elastic material with a high durometer, it will strongly resist initial deformation, making it harder to install. However, a stronger seal will result upon installation.

If the washer 18 is made from a material which plastically deforms during installation, it will not fully recover to its original ID. So long as the amount of plastic deformation is small enough to allow for interference stress to be present after installation, a seal will be formed, albeit a weaker seal.

Some materials which are initially elastic will "stress relax" over time. For those, a seal may be formed initially to an acceptable level, but, after time, the seal will weaken to a point where there is no effective seal at pressure. The washer material must therefore be chosen to maintain an acceptable seal over its expected lifetime. Elastomer materials are particularly suitable materials for the elastic washer of the invention, in the form of either a natural elastomer such as natural rubber or a synthetic elastomer such as a polyurethane elastomer or a silicone elastomer. Cross-linked elastomer materials are most preferred for longest lifetime performance of the assembly.

In the connector assembly of the invention, the housing body 14 must be more rigid than the washer 18. A thick wall of the insertion section 12 will require more force to deform. Taking into account both the material properties of the housing and the washer (durometer, plasticity, stress relaxation) and the geometry of these components, one is able to tailor a connection to meet sealing requirements over a range of differential pressures and duration of effective seals over time.

Preferred materials of construction for the connector housing 14 will possess a durometer (Shore A) in the range of 50 Shore A or greater, more preferably in the range of 75 to 95 Shore A. The washer 18 may comprise any elastomer, preferably one having a durometer of 30 to 70 Shore A, more preferably 50 to 60 Shore A.

The elastic washer 18, when properly seated in groove 13, is in circumferential tension, resulting in a radially inwardly directed compression force which forms a seal capable of withstanding a pressure gradient. The washer 18 can be a separate component part, as shown and discussed above, or it may be constructed as an integral reinforcement around opening 96 comprising a thicker ring of elastic material surrounding the opening 16.

Preferably, the elastic washer 18 is a flat ring washer, which presents a low profile in use, and is made of an elastomer such as block copolymers, polyurethanes, silicones, and natural rubbers, more preferably comprising a polyurethane, and is adhesively bonded to the flexible wall 22 by any suitable adhesive, such as an epoxy, a polyurethane or a silicone. For example, a particularly preferred elastic washer/adhesive combination would be a crosslinked polyurethane washer with a reactive polyurethane adhesive. These low profile and flexible features of the washer sallow for ease of packaging and handling of the flexible inflatable construction with the washer Installed thereon.

The connector assembly of the invention provides a relatively low cost, simple, flexible and low profile design added to the flexible article for use in such inflatable systems as garments, air mattresses, disposables, collapsible canteens, and other wearable/packable products. Seals capable of withstanding applied pressures of greater than 0.04 bar (0.5 psi) and exceeding 0.07 bar (1.0 psi), are readily achievable. However, it should be recognized that in certain applications lower applied pressures may exist in the final article.

As shown in Fig. 7, the connector assembly of this invention may also be used in constructions such as air mattresses 38 and similar articles. The air mattress 38 which is shown in the figure is comprised of individual compartments interconnected by openings 40. A small manual air pump 32 is connected via conduit 36 to the mattress 38 through the connector assembly of the invention, of which the housing 14 is visible in the figure.

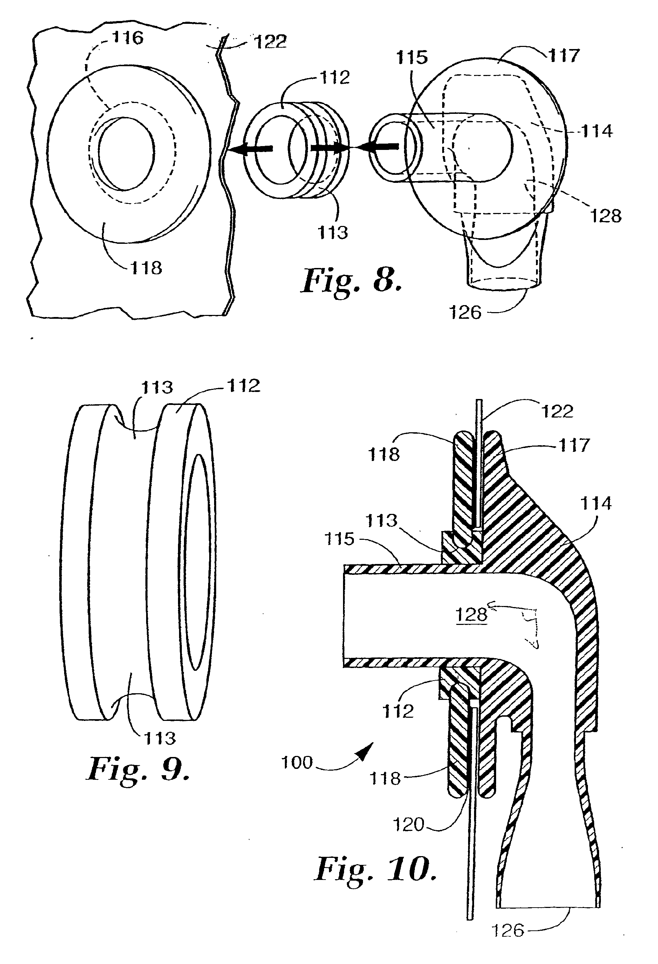

One possible alternative embodiment 100 of the connector assembly on the invention is shown in Figs. 8-10. In Fig. 8, the alternate external housing section 114 has an inlet 126, which is adaptable to be connected to a source of air such as a pump, and which opens into through-passageway 128 which extends into the insertion tube 115. This insertion tube 115 is generally a cylindrical tube and is either molded integrally with the housing section 114 or is affixed to base 117 by glue or other suitable technique. The tube 115 is adapted to accept rim member 112, having circumferential groove 113, slidably thereover. The rim 112 is then adhesively affixed to tube 115 forming the connector housing insert section. The rim 192 and tube 115 assembly is then press-fit, as indicated by the arrow, into and through the center opening 116 of the wall, around which is secured, by adhesive or other means, the elastic washer 118, thereby completing the connector assembly. This assembly is shown in cross-sectional detail in Fig. 10. Fig. 10 specifically depicts the connector assembly 100, through which passageway 128 extends, comprising external housing 114, shown molded integrally with tubular member 115, and having elastic washer 118 bound by adhesive 120 to wall 122, as shown, and seated in groove 113 in rim 112, the rim 112 being adhesively (not shown) affixed to tube 115, all effecting a seal around opening 118 in the wall 122 of an inflatable article. Fig. 9 depicts a perspective view of rim 112 having circumferential groove 113 and is included for completeness.

In the construction of the connector assembly of the invention, the housing is preferably constructed of a polyurethane, more preferably a thermoplastic polyurethane. Where the external housing and insertion tube are constructed as separate components, both are preferably made of polyurethane, more preferably thermoplastic polyurethane. It should be appreciated, however, that other suitable materials may be used in the connector assembly, depending on the requirements of the specific application.

The check valve shown schematically in Fig. 6 may be a one-way check valve, a two-way check valve or a pinch valve, depending on the circumstances of the particular inflatable construction and design preferences. A suitable pump or other source of air will be known to those skilled in this art.

The effectiveness of the seal formed when the elastic washer is seated within the groove of the insertion section is dependent upon the geometry and relative elasticity of the component parts. As an example, a washer of elastomeric urethane having a center opening inside diameter (ID) of 9.1 mm (0.36 inch) an outside diameter (OD) of 31.8 mm (1.25 inch ), and a thicknes of 3.2 mm (0.125 inch) when press-fit into a groove of OD 11.7 mm (0.46 inch) of a thermoplastic polyurethane insertion section provided a seal to pressure gradient exceeding 1.0 psi between the interior of an inflatable and the atmosphere. One skilled in this art will readily appreciate that effective seals may be achieved over a wide range of pressure gradients using the principles of the invention set forth herein.

Certain assemblies described above include adhesive bonds between components. A preferred adhesive is reactive polyurethane, although other adhesives may be suitable for particular application, and specific adhesives should not limit the scope of the invention in any way.

Elastic washers useful in the invention may be composed of natural rubbers, synthetic elastomers such as polyurethanes, silicones, etc., and others. Cross-linked forms of these materials often provide desirable advantages such as durability and other expected features of these cross-linked materials which are desirable in the articles of this invention. All such suitably elastic washers are within the scope of the invention.

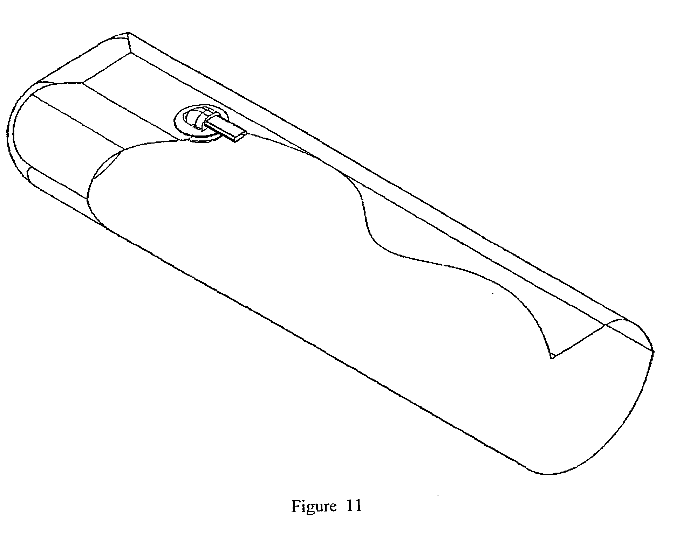

The connector assembly of the invention may be used with many types of inflatable flexible articles, Including air mattresses as discussed, garments such as jackets, vests, pants, coats and other similar items, and sleeping bags, to name a few. In addition, inflatable flexible articles which are Inflated with liquid, such as canteens and the like, can be fabricated using the connector assemblies of this invention. Figure 11 depicts a connector assembly of the present invention attached to a collapsible canteen.

Suitable flexible materials for at least the portion of the article wall to which the connector assembly is affixed are those materials having a flexural rigidity, as described in more detail herein, of 50,000 N*m or less, preferably 1000 N*m or less, and most preferably 200 N*m or less. Non-limiting examples of materials having these flexibilities include a wide range of fabrics, including wovens and non-wovens, resin impregnated fabrics, elastomeric sheets and other rubber-like materials. The flexible articles of the present may comprise some regions containing materials of higher stiffness; however, the inflatable regions of the articles wherein the low profile connector assembly will typically comprise flexible materials.

Embodiments of the present invention will now be described by way of example only with reference to the following examples.

### TEST

### Flexibility/Flexural Rigidity

The flexibility, or flexural rigidity, of suitable articles to which the connector assemblies of the present invention are attached can be determined using the "Standard Test Method for Stiffness of Nonwoven Fabrics Using the Cantilever Test", Method Number ASTM D5732-95 (Reapproved 2001).

This test method requires a 25.4 mm (1") wide by 203.2 mm (8") long sample. The sample is slid across a horizontal surface at a controlled rate so that one end overhangs the support platform. As the sample slides across the support platform and the overhang length increases, the cantilevered sample bends downward. When the downward bend angle reaches 0.785 radians (41.5°), the overhang length is measured. The overhang length, sample mass, and sample dimensions are then used to calculate the bending length and the flexural rigidity.

### EXAMPLE 1

The results for several flexible wall materials useful for atachment of the connector assembly of this invention are given in Table 1 below. The more flexible the material, the lower the bending length and the lower the flexural rigidity.

**TABLE 1 - BENDING LENGTH/FLEXURAL RIGIDITY (ASTM D5732)**

| Container Material | Bending length (mm) | Flexural Rigidity (N*m) |
|---|---|---|
| | | |
| Versollan RU 2204 | 70.0 | 38071 |
| (GLS Corporation, McHenry, IL) | | |
| 2-layer Gore-Tex^{®} laminate | 23.0 | 93 |
| GORE® Laminate # ECAT 001000B | 16.5 | 73 |

The flexible connector system of this invention is suitable for use in any article constructed, at least in the region where the connector assembly is to be affixed, of a material having a flexural regidity less than 50,000 N*m, more preferably less than 1000 N*m, and most preferably less than 200 N*m.

### EXAMPLE 2

An inflatable jacket was manufactured substantially in accordance with the teachings of Example 1 of U.S. Patent Application Serial No. 10/230,889, except that the inflation/deflation construct was fabricated in accordance with Figures 1-5 of the present application. The washer of the construct comprised a cross-linked polyurethane with a hardness of 55 Shore A. The connector of the construct comprised a crosslinked polyurethane with a hardness of 85 Shore A. To insert the inflation/deflation construct, as noted in 10/230,889, a hole was cut in one of the fabric panels and the construct was attached. The inflation/deflation construct was bonded to the fabric panel using a polyurethane adhesive.

## Claims

1. A connector assembly (10) for connecting an inflatable article to an inflation source, the assembly comprising:
an elastic washer (18);
a semi-rigid, hollow connector housing (14) having a first, generally tubular, insertable section (12), insertable through an opening (16) in a flexible wall (22) of said inflatable article, and a second external section extending oppositely from the insertable section and outwardly from said flexible wall upon insertion, the external section and the insertable section being connected, the two sections providing a continuous air passageway (28) therethrough into the inflatable article upon insertion therein, said passageway extending from an external opening (26) in said external section and being removably connectable thereat to said source of inflation fluid, through the connector assembly, and into the inflatable article,
wherein said insertable section has an external circumferential groove (13) therearound which, upon insertion into and through said wall opening, is secured thereat by the elastic washer (18) positioned immediately adjacent to and concentric with said wall opening in use, said washer being press-fit into said groove, the washer providing a seal at said wall opening, thereby sealing off leakage of fluid to or from said inflatable article and confining fluid passage to and through said passageway, thereby providing, when assembled, a low-profile pathway for fluid communication from said external source into said inflatable article through a wall opening thereof,
wherein the second external section includes a flanged base (17;117), so that the flexible wall (22) is positioned in use between the elastic washer and the flanged base (17; 117).

2. The connector assembly of claim 1, including a valve installed in fluid communication with the air in said passageway, which valve controls flow therethrough.

3. The connector assembly of claim 2, wherein said valve is a one-way check valve, a two-way check valve, or a pinch valve.

4. The connector assembly of claim 1, providing a seal effective to a pressure gradient of at least 0.04 bar (0.5 psi), or at least 0.07 bar (1.0 psi).

5. The connector assembly of claim 1, wherein the housing and insertable section are integrally formed into a unitary construction.

6. The connector assembly of claim 1, wherein said insertable section (114) is formed as a hollow tubular component having a rim (112) slidably mounted externally thereover, said rim having an external circumferential groove (113) therearound.

7. The connector assembly of claim 6, wherein said rim is mounted on said tubular component and adhesively affixed thereto.

8. The connector assembly of claim 1, wherein said washer is affixable to said wall.

9. The connector assembly of claim 8, wherein said washer is adhesively affixable to said wall.

10. The connector assembly of claim 9, wherein the adhesive is polyurethane.

11. The connector assembly of claim 11, wherein said washer is affixable under heat and pressure.

12. The connector assembly of claim 1, wherein, in use, said washer is integrally mouldable into said wall.

13. The connector assembly of claim 1, wherein said housing is polyurethane.

14. The connector assembly of claim 1, wherein said insertable section is polyurethane.

15. The connector assembly of claim 1, wherein said washer is an elastomer, synthetic elastomer, or crosslinked synthetic elastomer.

16. The connector assembly of claim 1, wherein said washer is an elastomer and said elastomer is a natural elastomer, preferably a natural rubber.

17. The connector assembly of claim 1, wherein said washer is a synthetic elastomer and said synthetic elastomer is a polyurethane elastomer or silicone elastomer.

18. The connector assembly of claim 1, wherein, in use, said inflatable article is a garment, a vest, a jacket, a sleeping bag, or a canteen.

19. The connector assembly of claim 1, further comprising a source of inflation air or inflation liquid.

20. The connector assembly of claim 1, wherein the external section and the insertable section are oriented at substantially a right angle with respect to each other.

21. The connector assembly of claim 20, wherein said housing is polyurethane.

22. The connector assembly of claim 20, wherein said insertable section is polyurethane.

23. The connector assembly of claim 20, wherein said washer is an elastomer, a natural elastomer, or natural rubber.

24. The connector assembly of claim 20, wherein said washer is a synthetic elastomer, a polyurethane elastomer, or a silicone elastomer.

25. The connector assembly of claim 20, wherein, in use, said inflatable article is a garment, a vest, a jacket, a pant, a coat, a mattress, a sleeping bag, or a canteen.

26. The connector assembly of claim 20, further comprising a source of inflation air or inflation liquid.

## Patentansprüche

1. Verbinderanordnung (10) für das Verbinden eines aufblasbaren Artikels mit einer Aufblasquelle, wobei die Anordnung aufweist:
eine elastische Scheibe (18);
ein halbstarres, hohles Verbindergehäuse (14) mit einem ersten im Allgemeinen rohrförmigen einsetzbaren Abschnitt (12), der durch eine Öffnung (16) in einer flexiblen Wand (22) des aufblasbaren Artikels eingesetzt werden kann, und einem zweiten äußeren Abschnitt, der sich entgegengesetzt vom einsetzbaren Abschnitt und nach außen von der flexiblen Wand beim Einsetzen erstreckt, wobei der äußere Abschnitt und der einsetzbare Abschnitt verbunden werden, wobei die zwei Abschnitte einen kontinuierlichen Luftdurchgang (28) dort hindurch in den aufblasbaren Artikel beim Einsetzen darin liefern, wobei sich der Durchgang von einer äußeren Öffnung (26) im äußeren Abschnitt aus, wo er entfernbar mit der Quelle des Aufblasfluids verbunden werden kann, durch die Verbinderanordnung und in den aufblasbaren Artikel erstreckt,
wobei der einsetzbare Abschnitt eine äußere Ringnut (13) dort herum aufweist, die beim Einsetzen in die und durch die Wandöffnung dort mittels der elastischen Scheibe (18) gesichert wird, die unmittelbar benachbart zur und konzentrisch mit der Wandöffnung bei Benutzung positioniert wird, wobei die Scheibe in die Nut mit Presspassung gebracht wird, wobei die Scheibe eine Dichtung an der Wandöffnung liefert, wodurch der Austritt von Fluid zum oder vom aufblasbaren Artikel abgedichtet wird und der Fluiddurchlass zum und durch den Durchgang begrenzt wird, wodurch, wenn sie montiert ist, ein flacher Verlauf für die Fluidverbindung von der äußeren Quelle in den aufblasbaren Artikel durch dessen Wandöffnung bewirkt wird, wobei der zweite äußere Abschnitt eine angeflanschte Basis (17; 117) umfasst, so dass die flexible Wand (22) bei Benutzung zwischen der elastischen Scheibe und der angeflanschten Basis (17; 117) positioniert wird.

2. Verbinderanordnung nach Anspruch 1, die ein Ventil umfasst, das in Fluidverbindung mit der Luft im Durchgang installiert ist, wobei das Ventil den Durchfluss dort hindurch steuert.

3. Verbinderanordnung nach Anspruch 2, bei der das Ventil ein Einwegregulierventil, ein Zweiwegeregulierventil oder ein Quetschventil ist.

4. Verbinderanordnung nach Anspruch 1, die eine Dichtung bereitstellt, die bei einem Druckgefälle von mindestens 0,04 Bar (0,5 psi) oder mindestens 0,07 Bar (1,0 psi) wirksam ist.

5. Verbinderanordnung nach Anspruch 1, bei der das Gehäuse und der einsetzbare Abschnitt zusammenhängend zu einer unitären Konstruktion ausgebildet sind.

6. Verbinderanordnung nach Anspruch 1, bei der der einsetzbare Abschnitt (114) als ein hohles, rohrförmiges Bauteil mit einem Rand (112) ausgebildet ist, der extern darüber verschiebbar montiert ist, wobei der Rand eine äußere Ringnut (113) dort herum aufweist.

7. Verbinderanordnung nach Anspruch 6, bei der der Rand am rohrförmigen Bauteil montiert und adhäsiv daran befestigt ist.

8. Verbinderanordnung nach Anspruch 1, bei der die Scheibe an der Wand befestigt werden kann.

9. Verbinderanordnung nach Anspruch 8, bei der die Scheibe adhäsiv an der Wand befestigt werden kann.

10. Verbinderanordnung nach Anspruch 9, bei der der Klebstoff Polyurethan ist.

11. Verbinderanordnung nach Anspruch 11, bei der die Scheibe unter Wärme und Druck befestigt werden kann.

12. Verbinderanordnung nach Anspruch 1, bei der bei Benutzung die Scheibe integriert in die Wand geformt werden kann.

13. Verbinderanordnung nach Anspruch 1, bei der das Gehäuse Polyurethan ist.

14. Verbinderanordnung nach Anspruch 1, bei der der einsetzbare Abschnitt Polyurethan ist.

15. Verbinderanordnung nach Anspruch 1, bei der die Scheibe ein Elastomer, synthetisches Elastomer oder vernetztes synthetisches Elastomer ist.

16. Verbinderanordnung nach Anspruch 1, bei der die Scheibe ein Elastomer ist und das Elastomer ein natürliches Elastomer ist, vorzugsweise ein Naturkautschuk.

17. Verbinderanordnung nach Anspruch 1, bei der die Scheibe ein synthetisches Elastomer ist und das synthetische Elastomer ein Polyurethanelastomer oder Silikonelastomer ist.

18. Verbinderanordnung nach Anspruch 1, bei der bei Benutzung der aufblasbare Artikel ein Kleidungsstück, eine Weste, eine Jacke, ein Schlafsack oder eine Feldflasche ist.

19. Verbinderanordnung nach Anspruch 1, die außerdem eine Quelle der Aufblasluft oder Aufblasflüssigkeit aufweist.

20. Verbinderanordnung nach Anspruch 1, bei der der äußere Abschnitt und der einsetzbare Abschnitt unter im Wesentlichen einem rechten Winkel mit Bezugnahme zueinander ausgerichtet sind.

21. Verbinderanordnung nach Anspruch 20, bei der das Gehäuse Polyurethan ist.

22. Verbinderanordnung nach Anspruch 20, bei der der einsetzbare Abschnitt Polyurethan ist.

23. Verbinderanordnung nach Anspruch 20, bei der die Scheibe ein Elastomer, ein natürliches Elastomer oder Naturkautschuk ist.

24. Verbinderanordnung nach Anspruch 20, bei der die Scheibe ein synthetisches Elastomer, ein Polyurethanelastomer oder ein Silikonelastomer ist.

25. Verbinderanordnung nach Anspruch 20, bei der bei Benutzung der aufblasbare Artikel ein Kleidungsstück, eine Weste, eine Jacke, eine Hose, ein Mantel, eine Matratze, ein Schlafsack oder eine Feldflasche ist.

26. Verbinderanordnung nach Anspruch 20, die außerdem eine Quelle der Aufblasluft oder Aufblasflüssigkeit aufweist.

## Revendications

1. Ensemble de raccordement (10) pour connecter un article gonflable à une source de gonflage, l'ensemble comprenant:
une rondelle élastique (18);
un logement de raccord creux semi-rigide (14) comprenant une première section insérable généralement tubulaire (12) pouvant être insérée à travers une ouverture (16) d'une paroi flexible (22) dudit article gonflable et une seconde section extérieure s'étendant de manière opposée à la section insérable et à l'extérieur de ladite paroi flexible lors de l'insertion, la section extérieure et la section insérable étant connectées, les deux sections procurant un passage d'air continu (28) les traversant et menant dans l'article gonflable lors de l'insertion dans celui-ci, ledit passage s'étendant d'une ouverture extérieure (26) dans ladite section extérieure jusque dans l'article gonflable à travers l'ensemble de raccordement et pouvant être raccordé de manière amovible, au niveau de la section extérieure, à ladite source de fluide de gonflage,
dans lequel ladite section insérable est pourvue sur son pourtour d'une gorge circonférentielle extérieure (13) qui, lors de l'insertion dans et à travers ladite ouverture de paroi, est fixée au niveau de celle-ci par la rondelle élastique (18) positionnée de manière immédiatement adjacente et concentrique à ladite ouverture de paroi lors de l'utilisation, ladite rondelle étant ajustée par embrochage à force dans ladite gorge, la rondelle fournissant un joint étanche au niveau de ladite ouverture de paroi, assurant une étanchéité contre toute fuite de fluide vers ou depuis ledit article gonflable et procurant au fluide un passage limité vers et à travers ledit passage, fournissant ainsi, une fois l'assemblage terminé, un passage à profil bas permettant une communication fluide de ladite source extérieure dans ledit article gonflable à travers une ouverture de paroi de celui-ci,
dans lequel la seconde section extérieure inclut une base à bride (17; 117) de manière à ce que la paroi flexible (22) soit positionnée, lors de l'utilisation, entre la rondelle élastique et la base à bride (17; 117).

2. Ensemble de raccordement selon la revendication 1, incluant une valve installée en communication fluide avec l'air dans ledit passage, laquelle valve commande l'écoulement à travers le passage.

3. Ensemble de raccordement selon la revendication 2, dans lequel ladite valve est un clapet de non retour unidirectionnel, un clapet de non retour bidirectionnel ou une valve à pincement.

4. Ensemble de raccordement selon la revendication 1, procurant un joint étanche efficace à un gradient de pression d'au moins 0,04 bar (0,5 psi) ou d'au moins 0,07 bar (1,0 psi).

5. Ensemble de raccordement selon la revendication 1, dans lequel le logement et la section insérable sont solidaires et forment une construction unitaire.

6. Ensemble de raccordement selon la revendication 1, dans lequel ladite section insérable (114) est formée en tant que composant tubulaire creux pourvu d'un rebord (112) monté de manière coulissante sur l'extérieur du composant, ledit rebord étant pourvu sur sa périphérie d'une gorge circonférentielle extérieure (113).

7. Ensemble de raccordement selon la revendication 6, dans lequel ledit rebord est monté sur ledit composant tubulaire et fixé de manière adhésive sur celui-ci.

8. Ensemble de raccordement selon la revendication 1, dans lequel ladite rondelle peut être fixée sur ladite paroi.

9. Ensemble de raccordement selon la revendication 8, dans lequel ladite rondelle peut être fixée de manière adhésive sur ladite paroi.

10. Ensemble de raccordement selon la revendication 9, dans lequel l'adhésif est du polyuréthane.

11. Ensemble de raccordement selon la revendication 11, dans lequel ladite rondelle peut être fixée sous l'effet de la chaleur et de la pression.

12. Ensemble de raccordement selon la revendication 1, dans lequel, lors de l'utilisation, ladite rondelle peut être moulée intégralement dans ladite paroi.

13. Ensemble de raccordement selon la revendication 1, dans lequel ledit logement est en polyuréthane.

14. Ensemble de raccordement selon la revendication 1, dans lequel ladite section insérable est en polyuréthane.

15. Ensemble de raccordement selon la revendication 1, dans lequel ladite rondelle est un élastomère, un élastomère synthétique ou un élastomère synthétique réticulé.

16. Ensemble de raccordement selon la revendication 1, dans lequel ladite rondelle est un élastomère et ledit élastomère est un élastomère naturel, de préférence un caoutchouc naturel.

17. Ensemble de raccordement selon la revendication 1, dans lequel ladite rondelle est un élastomère synthétique et ledit élastomère synthétique est un élastomère polyuréthane ou un élastomère silicone.

18. Ensemble de raccordement selon la revendication 1, dans lequel, lors de l'utilisation, ledit article gonflable est un vêtement, un gilet, une veste, un sac de couchage ou un bidon.

19. Ensemble de raccordement selon la revendication 1, comprenant, en outre, une source d'air de gonflage ou de liquide de gonflage.

20. Ensemble de raccordement selon la revendication 1, dans lequel la section extérieure et la section insérable sont orientées sensiblement à angle droit l'une par rapport à l'autre.

21. Ensemble de raccordement selon la revendication 20, dans lequel ledit logement est en polyuréthane.

22. Ensemble de raccordement selon la revendication 20, dans lequel ladite section insérable est en polyuréthane.

23. Ensemble de raccordement selon la revendication 20, dans lequel ladite rondelle est un élastomère, un élastomère naturel ou un caoutchouc naturel.

24. Ensemble de raccordement selon la revendication 20, dans lequel ladite rondelle est un élastomère synthétique, un élastomère polyuréthane ou un élastomère silicone.

25. Ensemble de raccordement selon la revendication 20, dans lequel, lors de l'utilisation, ledit article gonflable est un vêtement, un gilet, une veste, un pantalon, un manteau, un matelas, un sac de couchage ou un bidon.

26. Ensemble de raccordement selon la revendication 20, comprenant, en outre, une source d'air de gonflage ou de liquide de gonflage.
